# EUROPEAN PATENT APPLICATION

(11) **EP 1 775 927 A2**
(43) Date of publication of application: **18.04.2007**
(21) Application number: 07101244.7
(22) Date of filing: 19.07.2004
(51) Int. Cl.: H04M 11/06

(54) **Wide-band network communication device and relative operation method**

(30) Priority: 18.07.2003 IT TO20030556
(62) Divisional of application: 04103430.7
(71) Applicant: Telsey S.p.A., 31055 Quinto di Treviso (IT)
(72) Inventor: Mestriner, Roberto, 31057 Silea (IT); Segato, Francesco, 35030 Sarmeola di Rubano (IT)
(74) Representative: Jorio, Paolo

(57) **Abstract**

A wide-band network communication device connectable to a telephone system (2) to communicate over a telephone communication network (3) with a remote communication station (4), which receives/transmits an analog signal (S_{POTS}) coding telephone information, or alternately a wide-band digital signal (S_{BAND}) coding telephone information; the communication device (1) having a main terminal (5a) connectable to the telephone system (6) to receive/transmit the analog signal (S_{POTS}) or the wide-band digital signal (S_{BAND}); and a wide-band signal decoding block (11) having a first terminal (11a) connected to the main terminal (5a), and which codes/decodes the wide-band signal (S_{BAND}) to supply at a second terminal (11b) the telephone information coded in an analog telephone signal (S_{TA}); the communication device (1) also having a detecting block (14) for generating an activating signal (S_{ATT}) upon detection of an absence condition of the analog signal (S_{POTS}); and the decoding block (11) having a central processing unit (11e) which, upon reception of the activating signal (S_{ATT}), generates an activation request signal requesting activation of the wide-band digital telephone service, and transmit the activation request signal to the remote communication station (4).

## Description

The present invention relates to a wide-band network communication device.

In one of the most widely used technologies for transmitting blocks of wide-band service coding data (where wide-band transmission is intended to mean communication at a data transmission rate of 1 Mbps or over), wide-band service operators employ the existing national telephone network typically used by telephone operators for "analog" transmission to subscribers of telephone signals (voice, fax, etc.) typically referred to as POTS (Plain Old Telephone Service) signals. As is known, in fact, simultaneous transmission of "wide-band" data and analog telephone signals over the same telephone line, i.e. over the telephone loop, is made possible using signals of different bandwidths.

Recently, thanks to modern digital compression techniques for compressing voice information into data blocks, certain wide-band service operators have succeeded in coding/decoding and effecting wide-band reception/transmission, over the national telephone network, of telephone information, such as voice, fax, modem information (Voice Over IP service), which is received/transmitted by the user by means of a wide-band network communication device which acts as an "interface" between wide-band service user devices and the telephone network.

More specifically, the communication device, commonly referred to as a CPE (Customer Premises Equipment) or Residential Gateway, is connected on one side to the telephone network loop for two-way data communication with the wide-band service remote communication station over the telephone network, using a symmetrical or asymmetrical transmission/reception protocol (xDSL, VDSL, ADSL, etc.), and, on the other side, has a series of "output" terminals supplying "wide-band" information to user devices, such as a Set Top Box, personal computer, telephone, fax, modem, in the user's premises.

More specifically, the communication device is connected by a connector or "input terminal" to a telephone system socket in the user's premises, and, in addition to the output terminals supplying video information, PC, INTERNET data, etc., also has a voice terminal which, following decoding and analog/digital conversion of the wide-band signals, supplies the telephone signal (in analog form) to the telephone device, e.g. a conventional user telephone.

Though widely used, communication devices proposed so far have various drawbacks which prevent them from being used to full potential. In particular, connecting the communication device to the user telephone system means that, when the wide-band telephone service is activated, use of the user telephone system is limited to the telephone device connected to the communication device voice terminal, with no possibility of wide-band communication over telephones connected to the other free telephone system sockets. At present, to eliminate this drawback, the user telephone system must be modified by disconnecting from the main telephone network the portion of the "input" telephone loop connecting the user telephone system, and interposing the communication device between the main telephone network and the input portion. By so doing, the input terminal of the communication device is connected to the portion of the telephone loop connected to the telephone network, while its voice terminal is connected to the "input" portion of the telephone system to make the telephone signal (the analog signal obtained by decoding and D/A converting telephone data blocks) available at all the telephone system sockets.

Besides requiring skilled work on the telephone system itself, thus increasing the overall cost to the user of installing the communication device, the above solution also requires that the communication device be located at the telephone system input point, i.e. at the "main" telephone socket from which the telephone system branches off, so that additional wiring is required to connect the PC data, video, etc. output terminals to the corresponding user devices, which are normally located elsewhere with respect to the telephone system input point.

Moreover, the above work can only be done after the wide-band service is activated by the wide-band service operator, thus causing obvious inconvenience to communication device users.

It is an object of the present invention to provide a wide-band network communication device designed to eliminate the aforementioned drawbacks.

According to the present invention, there is provided a method of automatically activating a wide-band digital telephone service in a wide-band network communication device, as claimed in Claim 1.

According to the present invention, there is also provided a wide-band network communication device, as claimed in Claim 8.

A non-limiting embodiment of the present invention will be described by way of example with reference to the accompanying drawings, in which:
Figure 1 shows, schematically, a wide-band network communication device in accordance with the teachings of the present invention;
Figure 2 shows a flow chart of the operations performed by the wide-band network communication device to automatically activate a remote wide-band digital telephone service.

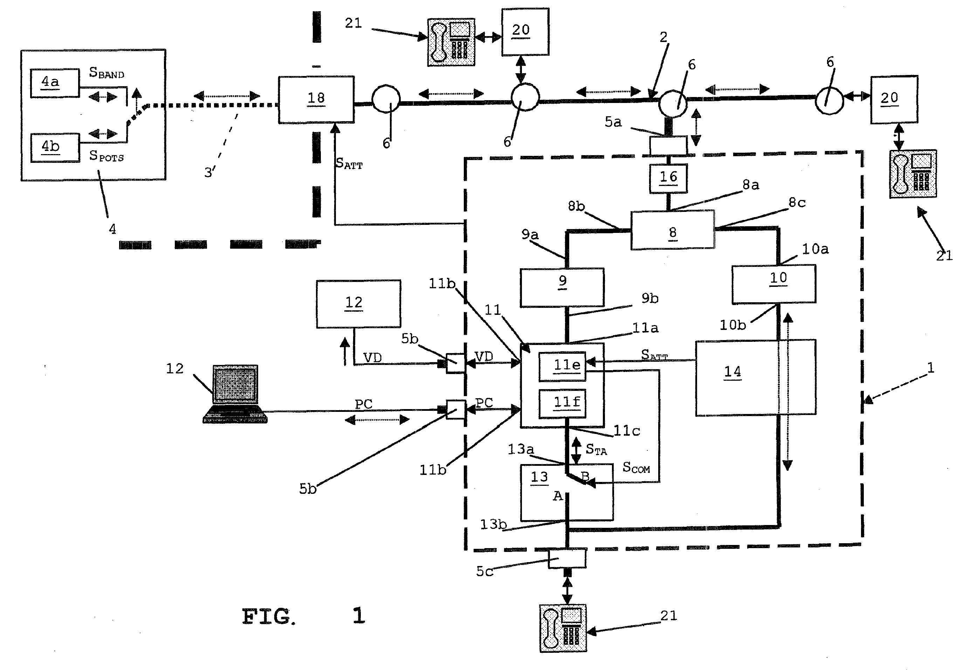

Number 1 in Figure 1 indicates as a whole a wide-band network communication device connectable to a telephone system 2 preferably, though not necessarily, located inside a building (shown schematically by the bold dash line) and connected to a main telephone network 3, outside the building, permitting two-way communication of information between communication device 1 and at least one remote communication station 4.

More specifically, remote communication station 4 transmits/receives over main telephone network 3 a digital wide-band signal S_{BAND} coding a series of wide-band services, or alternately an analog telephone signal S_{POTS} coding telephone information. In the example shown, the wide-band signal S_{BAND} contains the data blocks coding PC information and/or video VD information and/or INTERNET information and/or preferably, though not necessarily, telephone information and other wide-band service information; while the telephone signal S_{POTS} comprises telephone service, such as voice, fax, modem, information.

In connection with the above, it should be pointed out that remote communication station 4 may comprise the wide-band service operator exchange 4a, which, as is known, supplies the user with wide-band signal S_{BAND}; and the conventional telephone operator remote communication exchange 4b, which, as is known, supplies the user with analog telephone signal S_{POTS}.

It should also be pointed out that, in use, following a request to activate wide-band connection of a conventional telephone (POTS) user, the telephone network 3 user loop is switched from remote telephone operator communication exchange 4b to remote wide-band service operator communication exchange 4a, which, once the user is enabled access to the "digital" telephone service, typically referred to as "Voice Over IP service", is also able to code telephone information in the wide-band signal S_{BAND}. The instant in which the switch is made by the telephone operator from remote communication exchange 4b to remote communication exchange 4a (of the wide-band service operator) to receive the "Voice Over IP" service will be referred to hereinafter as the CUT OVER instant.

With reference to Figure 1, communication device 1 substantially comprises: a port or main connection terminal 5a connectable to a telephone socket 6 of telephone system 2; a combining block 8 having a first terminal 8a connected to main connection terminal 5a; a first filter block 9 having a first terminal 9a connected to a second terminal 8b of combining block 8; a second filter block 10 having a first terminal 10a connected to a third terminal 8c of combining block 8; and a decoder block 11, which has a first terminal 11a connected to a second terminal 9b of first filter block 9, a number of second terminals 11b (two shown in Figure 1) for supplying/receiving information relative to video VD or personal computer PC data or to other wide-band service data, and a third terminal 11c for supplying/receiving telephone information in an analog telephone signal S_{TA}.

More specifically, in the Figure 1 example, combining block 8 may be defined by an adding or "splitter" filter designed to "sum" the signals received at second and third terminals 8b and 8c, and to supply first terminal 8a with a single signal available on the loop of telephone system 2; while first filter block 9 is defined by a high-pass filter designed to filter, i.e. greatly attenuate, the amplitude of any signal received at first terminal 9a and of a frequency below a predetermined cutoff frequency f₁.

Second filter block 10 has a second terminal 10b, and is defined by a low-pass filter defined to filter, i.e. greatly attenuate, the amplitude of any signal received at first terminal 10a and of a frequency above a predetermined cutoff frequency f₂<f₁.

In connection with the above, it should be pointed out that, in use, first and second filter block 9 and 10 provide for receiving and filtering wide-band signal S_{BAND} and telephone signal S_{POTS}, so as to respectively supply only wide-band signal S_{BAND} and telephone signal S_{POTS} at corresponding second terminals 9b and 10b.

With reference to Figure 1, decoder block 11 is defined by a communication module, such as a modem, for wide-band data reception and transmission using a known symmetrical or asymmetrical communication protocol, such as xDSL, ADSL, VDSL, etc.

More specifically, decoder block 11, i.e. the communication module, receives wide-band signal S_{BAND} at first terminal 11a, processes it according to the communication protocol of telephone network 3 to decode the information contained in it, separates the data into different types, and supplies it separately, in the case of PC, video VD, INTERNET data, to corresponding secondary connection terminals 5b of communication device 1 connected to corresponding second terminals 11b, and, in the case of telephone information data, to third terminal 11c.

Decoder block 11 also receives PC, VD, INTERNET data supplied to corresponding second terminals 11b by wide-band service user devices 12, e.g. a PC, and telephone information data supplied to third terminal 11c, codes it accordingly into wide-band signal S_{BAND}, and transmits wide-band signal S_{BAND} according to the predetermined communication protocol to telephone system 2 and then over telephone network 3 to remote communication exchange 4a.

In the example shown, decoder block 11, i.e. the communication module, comprises a central processing unit CPU 11e for controlling the various data functions of decoder block 11, e.g. coding/decoding, "separation", and data communication at the various terminals of communication device 1; and a voice data processor 11f or so-called VOIP (Voice Over Internet Protocol) processor, which receives/transmits the voice telephone data supplied/transmitted to central processing unit 11e, and processes it (performs a digital/analog conversion) to supply/receive the telephone information in analog telephone signal S_{TA} via third terminal 11c.

Central processing unit 11e receives an activating signal S_{ATT} (described in detail later on) which commands central processing unit 11e to generate a signal S_{LB} coding a request to activate the wide-band digital telephone service, and to transmit signal S_{LB} over telephone network 3 to wide-band service operator remote communication exchange 4a.

Central processing unit 11e also receives an activation confirmation signal S_{AB} from remote communication exchange 4a confirming activation of the wide-band digital telephone service, and, on receiving the confirmation signal, generates a control signal S_{COM} (described in detail later on). Decoder block 11 is a known type and therefore not described in further detail.

With reference to Figure 1, unlike known wide-band network communication devices, communication device 1 comprises a switch block 13 having a first terminal 13a connected to third terminal 11c of decoder block 11, and a second terminal 13b, and which, when activating signal S_{ATT} is received, switches automatically between an open position (indicated B in Figure 1), in which first and second terminals 13a, 13b are disconnected, and a closed position (indicated A in Figure 1), in which first and second terminals 13a, 13b are connected; and a detecting block 14 interposed between second terminal 10b of second filter block 10 and second terminal 13b of switch block 13, and which provides for detecting the telephone signal S_{POTS} at second terminal 10b of second filter block 10, determining whether the telephone signal S_{POTS} meets a predetermined condition, and supplying activating signal S_{ATT} when the predetermined condition is met. In the example shown, the predetermined condition may be met when detecting block 14 detects no telephone signal S_{POTS} at second terminal 10b, which is equivalent to no telephone signal S_{POTS} at main connection terminal 5a of communication device 1.

Detecting block 14 may be defined, for example, by a comparing circuit (e.g. a comparator) which determines the absence of telephone signal S_{POTS} by comparing the voltage/current value at second terminal 10b of second filter block 10 with a predetermined voltage/current reference threshold S_{GL}, and supplies activating signal S_{ATT} to central processing unit 11e of decoder block 11, depending on the outcome of the comparison. In the example shown, detecting block 14 supplies central processing unit 11e with an activating signal S_{ATT} having a first logic level when the voltage/current value is below the predetermined threshold S_{GL} (condition equivalent to no telephone signal SPOTS), and a second logic level when the voltage/current value is above the predetermined threshold S_{GL} (condition equivalent to the presence of telephone signal S_{POTS}).

Detecting block 14 also connects second terminal 10b of second filter block 10 directly to third terminal 11c of the decoder block, and, in use, switches to a "disable" condition on detecting no signal S_{POTS} at second terminal 10b of second filter block 10.

Switch block 13 may be defined by an electronic switching relay closable by control signal S_{COM} from central processing unit 11e of decoder block 11.

Communication device 1 also comprises, preferably though not necessarily, a protection block 16 interposed between first terminal 8a of combining block 8 and main connection terminal 5a, and defined by a number of electric circuits (not shown) for protecting the above blocks of communication device 1 from overvoltage and/or overcurrent in telephone system 2 or telephone network 3; and, preferably though not necessarily, a voice terminal 5c connected to second terminal 13b of switch block 13, and connectable to a telephone device 21 by which to supply/receive analog telephone signal S_{TA} coding the telephone information.

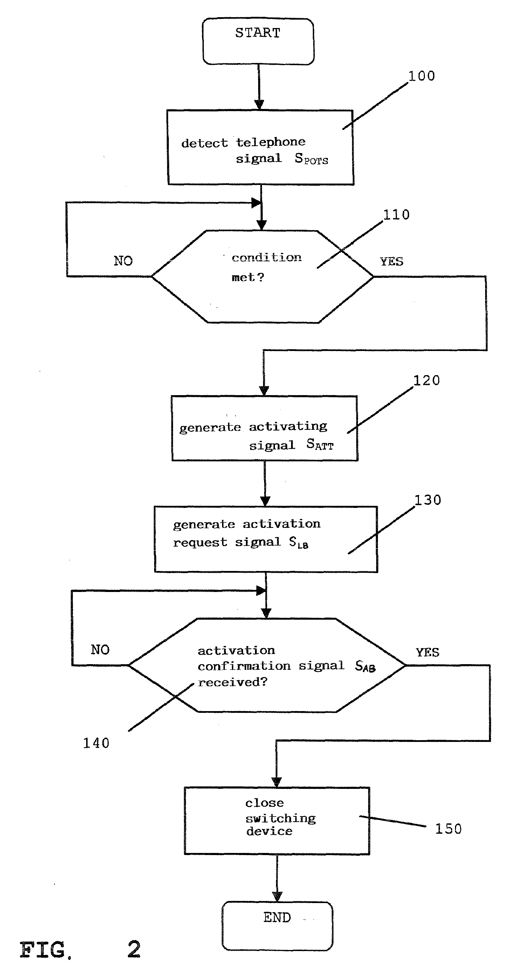

Operation of communication device 1 to automatically activate connection of user telephone system 2 to the wide-band digital telephone service (i.e. Voice Over IP service) will now be described with reference to Figure 2, and assuming communication device 1 switches from a first operating condition, in which analog telephone signal S_{POTS} is communicated to and from conventional telephone operator remote communication exchange 4b, to a second operating condition, in which communication of telephone signal S_{POTS} is eliminated, and communication device 1 requests activation of the remote wide-band digital telephone service by remote communication exchange 4a.

More specifically, operation of communication device 1 will be described relative to automatic activation of connection of the user telephone system to the wide-band digital telephone service at the "CUT OVER" instant, i.e. the instant in which "analog" telephone communication to communication device 1 is "cut off", and, at the same time, "digital" telephone communication by the "wide-band" telephone service to and from communication device 1 is activated.

Communication device 1 is assumed to be initially in a pre-CUT OVER state, in which the telephone signal S_{POTS} transmitted/received by remote communication exchange 4 over main telephone network 3 and telephone system 2 is available at the various telephone sockets 6 of telephone system 2, to which corresponding telephone devices 21 are preferably connected via a low-pass filter 20, as well as at voice terminal 5c of communication device 1, to which a telephone device 21 is connected.

Communication device 1 is fully "transparent" to telephone signal S_{POTS}, and receives/supplies it directly via voice terminal 5c to telephone device 21. More specifically, at this stage, second filter block 10 allows telephone signal S_{POTS} through to and from voice terminal 5b, and therefore to telephone device 21.

Detecting block 14 detects telephone signal S_{POTS} (block 100), and determines whether or not the predetermined condition, i.e. the absence of telephone signal S_{POTS}, is met (block 110). If it is not (NO output of block 110), i.e. the presence of telephone signal S_{POTS} is detected, detecting block 14 remains on standby and does not supply activating signal S_{ATT} to central processing unit 11e, which continues to operate "normally" (possibly only performs wide-band functions, without the wide-band telephone service) and keeps switch block 13 in the open position B by means of control signal S_{COM}.

In connection with the above, it should be pointed out that, at this stage, reception by communication device 1 of a wide-band signal S_{BAND} not coding telephone information has no effect on the "transparency" of communication device 1 to telephone signal S_{POTS}. In this case, in fact, wide-band signal S_{BAND} is only allowed through first filter block 9, and is decoded/coded by decoder 11, which supplies/receives the PC, INTERNET data etc. at secondary connection terminals 5b.

With reference to Figure 2, when the absence of telephone signal S_{POTS} is detected (condition following the CUT OVER instant) (output YES of block 110), detecting block 14 generates activating signal S_{ATT} (block 120) and switches to the disable condition.

At this point, on receiving activating signal S_{ATT}, central processing unit 11e automatically generates signal S_{LB} requesting activation of the wide-band digital telephone service, and transmits it to remote communication exchange 4a (block 130), and then awaits signal S_{AB} from remote communication exchange 4a confirming activation of the service (block 140).

On receiving signal S_{AB} (confirming activation of the service) from remote communication exchange 4a (YES output of block 140), central processing unit 11e closes switch block 13 by means of control signal S_{COM} (block 150).

At this point, third terminal 11c of communication device 1, at which analog telephone signal S_{TA} is present, is connected both to voice terminal 5c, to which telephone device 21 is connected, and also to user telephone system 2 via detecting block 14, second filter block 10, combining block 8, and telephone socket 6, so that analog telephone signal S_{TA} is advantageously made available at any other telephone socket 6 forming part of telephone system 2 within the building.

Communication device 1 has the big advantage of fully automatically requesting connection to the wide-band digital telephone service by the wide-band service operator communication exchange at the CUT OVER instant, and, following activation of the service, of making the telephone signal S_{TA} - produced by the VOIP processor decoding incoming telephone data - available at any telephone socket in the telephone system, thus eliminating the need for skilled work on the telephone system, and so reducing the installation cost of communication device 1.

Clearly, changes may be made to communication device 1 as described and illustrated herein without, however, departing from the scope of the present invention.

In particular, communication device 1 may comprise a modular filter element 18 (Figure 1) interposed between telephone network 3 and an input terminal of telephone system 2, and which acts as an all-pass filter when switch block 13 is in open position B, to permit communication of both wide-band signal S_{BAND} and analog telephone signal S_{POTS} to telephone network 3, or alternately as a high-pass filter when switch block 13 is in closed position A, so as to only allow wide-band signal S_{BAND} through to remote communication exchange 4a, and to attenuate any other undesired signals. In the example shown, modular filter element 18 may preferably, though not necessarily, be controlled by activating signal S_{ATT} generated by central processing unit 11e, or by control signal S_{COM}, so as to act as an all-pass filter in the absence of activating signal S_{ATT} or control signal S_{COM} (pre-CUT OVER condition), or alternately as a high-pass filter upon reception of activating signal S_{ATT} or control signal S_{COM} (post-CUT OVER condition).

## Claims

1. A method of automatically activating a wide-band Voice over IP service in a wide-band network communication device (1) connectable to a telephone system (2) to communicate over a telephone communication network (3) with a remote communication station (4), which receives/transmits over said telephone communication network (3) an analog signal (S_{POTS}) coding telephone information, or alternately a wide-band digital signal (S_{BAND}) comprising said telephone information; said communication device (1) comprising a main terminal (5a) connectable to said telephone system (2) to receive/transmit said analog signal (S_{POTS}) or said wide-band digital signal (S_{BAND}); wide-band signal decoding means (11) having a first terminal (11a) connected to said main terminal (5a), and which code/decode said wide-band signal (S_{BAND}) to supply at a second terminal (11c) said telephone information coded in an analog telephone signal (S_{TA});
said method being **characterized by** comprising the steps of:
a) detecting an absence condition of said analog signal (S_{POTS}) at said main terminal (5a); and
b) activating, when said absence condition of said analog signal (S_{POTS}) is detected, switching means (13) interposed between said second terminal (11c) and said telephone system (2, 6), so as to communicate said analog telephone signal (S_{TA}) between the second terminal (11c) and the telephone system (2, 6).

2. A method as claimed in Claim 1, wherein said step a) comprises the step of detecting whether the voltage/current value of said analog signal S_{POTS}) satisfies a given relationship with a reference threshold (S_{GL}).

3. A method as claimed in Claim 2, wherein said relationship is satisfied when the voltage/current value of said analog signal is below said reference threshold (S_{GL}).

4. A method as claimed in any one of the foregoing Claims, **characterized by** effecting said wide-band communication between said communication device (1) and said telephone network (3) by means of an xDSL protocol.

5. A method as claimed in any one of the foregoing Claims, wherein said network communication device (1) comprises a modular filter element (18), which is interposed between said telephone network (3) and an input terminal of telephone system (2); said modular filter element (18) operates as an all-pass filter to allow communication of both wide-band signal (S_{BAND}) and analog telephone signal (S_{POTS}) to said telephone network (3), or alternately, as a high-pass filter, so as to only allow wide-band signal (S_{BAND}) through to remote communication station (4); said method comprising the steps of activate said modular filter element (18) as a high-pass filter, when said absence condition of said analog signal (S_{POTS}) is detected or alternately activate said modular filter element (18) as an all-pass filter, when said absence condition of said analog signal (S_{POTS}) is not detected.

6. A wide-band network communication device (1) connectable to a telephone system (2,6) to communicate over a telephone communication network (3) with a remote communication station (4), which receives/transmits over said telephone communication network (3) an analog signal (S_{POTS}) coding telephone information, or alternately a wide-band digital signal (S_{BAND}) comprising said telephone information; said communication device (1) comprising a main terminal (5a) connectable to said telephone system (2,6) to receive/transmit said analog signal (S_{POTS}) or said wide-band digital signal (S_{BAND}); wide-band signal decoding means (11) having a first terminal (11a) connected to said main terminal (5a), and which code/decode said wide-band signal (S_{BAND}) to supply at a second terminal (11c) said telephone information coded in an analog telephone signal (S_{TA});
said communication device (1) being **characterized by** comprising:
- detecting means (14) for detecting an absence condition of said analog signal (S_{POTS}) at said main terminal (5a) of said communication device (1);
- switching means (13) interposed between said second terminal (11c) and said telephone system (2, 6), so as to communicate said analog telephone signal (S_{TA}) between the second terminal (11c) and the telephone system (2, 6), when said absence condition of said analog signal (S_{POTS}) is detected.

7. A communication device as claimed in Claim 6, wherein said detecting means (14) comprise comparing means for comparing the voltage/current at said main terminal (5a) with a predetermined reference threshold (S_{GL}).

8. A communication device as claimed in Claim 6 or 7, wherein said switching means (13) comprise an electronic switching relay.

9. A communication device as claimed in any one of the foregoing Claims 6 to 8, comprising a modular filter element (18), which is interposed between said telephone network (3) and an input terminal of telephone system (2); said modular filter element (18) operates as an all-pass filter to allow communication of both wide-band signal (S_{BAND}) and analog telephone signal (S_{POTS}) to said telephone network (3) when said absence condition of said analog signal (S_{POTS}) is detected or, alternately, as a high-pass filter, so as to only allow wide-band signal (S_{BAND}) through to remote communication station (4), when said absence condition of said analog signal (S_{POTS}) is not detected.

10. A communication device as claimed in any one of Claims 6 to 9, wherein said wide-band communication between said communication device (1) and said telephone network (3) is effected by means of an xDSL protocol.
